# EUROPEAN PATENT APPLICATION

(11) **EP 0 573 072 A2**
(43) Date of publication of application: **08.12.1993**
(21) Application number: 93109053.4
(22) Date of filing: 04.06.1993
(51) Int. Cl.: H04B 7/005

(54) **Power control device for controlling the output level in digitally modulated radio signals**

(30) Priority: 05.06.1992 JP 145302/92
(71) Applicant: JAPAN RADIO CO., LTD, Mitaka-shi Tokyo 181 (JP)
(72) Inventor: Inokuchi, Hiroyuki, c/o Japan Radio Co., Ltd., Mitaka-shi, Tokyo (JP)
(74) Representative: Prüfer, Lutz H., Dipl.-Phys.

(57) **Abstract**

In a level control device for producing an output signal in digital modulation with an amplitude variation, a control signal generator (19) comprises an AD converter (23) for converting to a digital value a level of a signal produced by a level detector (17) by detecting the output signal, a processor (25) for providing a processed value by comparing the digital value with a reference value, and a DA converter (27) for converting the processed value to a control value for controlling a variable attenuator (11). Controlled, the attenuator produces an attenuated signal which is used as the output signal with its level or power kept at a controlled value determined by the reference value.

## Description

This invention relates to a level or power control device for use in digital modulation accompanying an amplitude variation, such as in π/4 quadrature phase shift keying (QPSK) modulation.

Various level control devices are already known for use more in general. Examples are described in Japanese Patent Prepublication (Kôkai) No. 157,927 of 1992. According to this prepublication, an intermediate frequency (IF) signal is preliminarily mixed with a local signal into a radio frequency (RF) signal for supply to a prior-art level control device. In an improved level control device revealed in the prepublication, an IF signal is supplied directly to the level control device. The improved level control device produces an RF signal with a controlled level.

Meanwhile, conversion of analogue communication to digital communication is in rapid progress recently. Digital modulation with an amplitude variation is widely applied to communication networks. For exampLe, π/4 QPSK modulation and demodulation is becoming into practical use in a mobile telephone and/or other communication network.

In the manner which will later be described in greater detail, a level control device is known for use in digital modulation accompanying an amplitude variation. In general, such a level control device is supplied with a device input signal and produces a device output signal with a controlled or predetermined level. The device input signal is delivered to a variable attenuator and is produced as an attenuator output signal with an attenuated level. It is possible to use whichever of an IF and an RF signal as the device input signal.

In this level control device, a level detecting unit detects the attenuator output signal to produce a detected signal with a detected level related to the attenuated level. Based on the detected level, a control signal generating unit generates a control signal with an attenuation control level for supply to the variable attenuator to enable use of the attenuator output signal as the device output signal.

A little more in detail, the attenuator output signal is converted in the level detecting unit into an RF signal having an amplified level derived from the attenuated level when the device input signal is an IF signal. When an RF signal is used as the device input signal, the attenuator output signal is amplified into an amplified signal having the amplified level. The level detecting unit detects either the RF or the amplified signal to produce the detected signal with a time constant. A delay is given by the time constant to build up of the detected signal and fed back to the RF or the amplified signal. Being either the RF or the amplified signal, the device output signal undesiredly slowly builds up upon start of transmission of the device output signal.

The time constant furthermore gives a slow build down to the device output signal on suspending the transmission. The slow up and down are objectionable particularly when time division multiplex (TDM) is applied for effective use of channels to the digital modulation with the amplitude variation.

It is consequently an object of the present invention to provide a level control device which is for use in digital modulation accompanying an amplitude variation and which gives a steep build up to a device output signal.

It is another object of this invention to provide a level control device which is of the type described and which gives a steep build down to the device output signal when transmission is turned off.

Other objects of this invention will become clear as the description proceeds.

In accordance with this invention, there is provided a level control device producing a device output signal in response to a device input signal with the device output signal given a controlled output level and comprising a variable attenuator responsive to the device input signal for producing an attenuator output signal with an attenuated level, level detecting means for detecting the attenuator output signal to produce a detected signal with a detected level related to the attenuation level, and control signal generating means for generating a control signal for supply to the variable attenuator based on the detected level, characterised in that the control signal generating means comprises an AD converter for converting the detected level to a digital value, a processor for processing the digital value into a processed value by comparing the digital value with a reference value, and a DA converter for converting the processed value to an analogue value to produce a controller output signal with the analogue value for use as the control signal, whereby the attenuator output signal is used as the device output signal.

The instant invention will now be described with reference to accompanying drawing figures, in which:
Fig. 1 is a block diagram of a conventional level control device;
Fig. 2 schematically shows an attenuation characteristic used in a level control device in general;
Fig. 3 is a schematic representation of a wave form of a device output signal produced by the level control device depicted in Fig. 1;
Fig. 4 is a block diagram of a level control device according to an embodiment of this invention; and
Fig. 5 schematically shows a wave form of a device output signal of the level control device illustrated in Fig. 4.

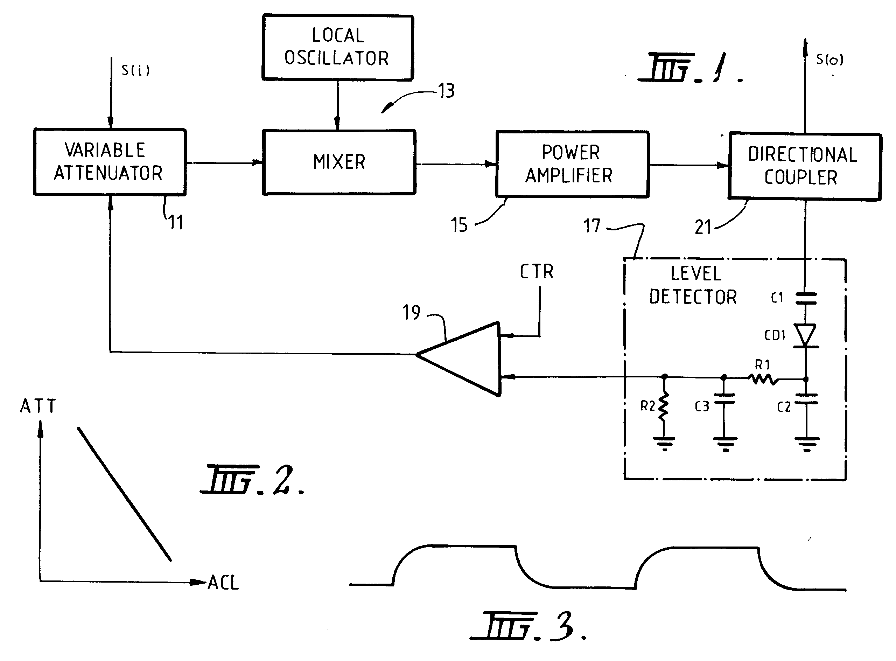

Referring to Fig. 1, a conventional level or power control device will first be described in order to facilitate an understanding of the present invention. In the manner described heretobefore, the level control device is for use in digital modulation accompanying an amplitude variation, such as π/4 QPSK modulation. Responsive to a digital device input signal S(i), the level control device produces a digital device output signal S(o) with a controlled or predetermined output level. It is possible to use as the device input signal whichever of an IF signal and an RF signal. Merely for convenience of the description, it will be presumed that the device input signal is an If signal.

Supplied with the device input signal, a variable attenuator 11 produces an attenuator output signal with an attenuated level. An up converter 13 comprises a local oscillator for generating a local signal and a mixer for mixing the attenuator output signal and the local signal into an RF signal. A power amplifier 15 amplifies the RF signal into an amplified signal of an amplified level. Inasmuch as the RF signal is produced in this manner, the amplified level is related to the attenuated level.

The amplified signal is coupled to a level detector 17 in the manner which will presently be described. The level detector 17 detects the amplified signal and produces a detected signal with a detected level related to the amplified level and consequently to the attenuated level.

More particularly, the level detector 17 comprises a first capacitor C1 supplied with the amplified signal. A detector diode CD1 and a second capacitor C2 are connected in series between the first capacitor C1 and ground to serve as a rectifier for producing a half-wave rectified signal. A point of connection between the detector diode and the second capacitor is grounded by a series connection of a first resistor R1 and a third capacitor C3 to serve as a smoothing circuit for depriving the amplitude variation of the half-wave rectified signal. The detected signal is produced at a point of connection between a second resistor R2 and a point of connection between the first resistor and the third capacitor.

It is now understood that a combination of the up converter 13, the power amplifier 15, and the level detector 17 serves as a level detecting unit for detecting the attenuator output signal to produce the detected signal. If an RF signal is used as the device input signal, the level detecting unit (13-17) need not include the up converter 13. In such an event, the level detecting unit (15, 17) amplifies the attenuator output signal directly to the amplified signal and then produces the detected signal.

An operational amplifier 19 has a noninverted and an inverted input terminal and an amplifier output terminal. Supplied with the detected signal and a control voltage CTR at the noninverted and the inverted input terminals, the operational amplifier 19 compares the detected level with the control voltage to produce an attenuation control signal at the amplifier output terminal for supply back to the variable attenuator 11. Consequently, the operational amplifier 19 serves as a control signal generating unit. Based on the detected level, the control signal generating unit (19) generates the attenuation control signal with an attenuation control level or value.

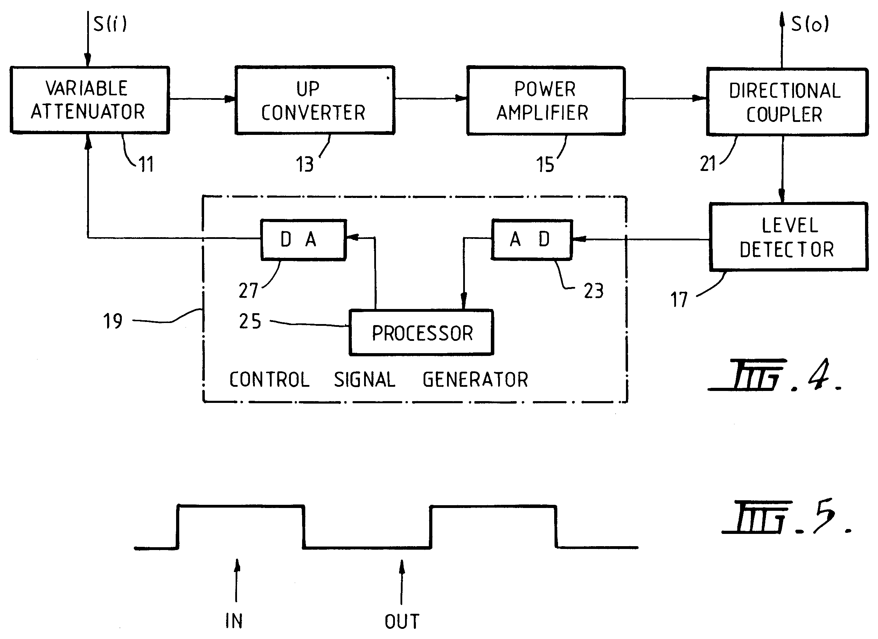

Turning temporarily to Fig. 2, the variable attenuator 11 has an attenuation characteristic schematically exemplified by a straight line. More specifically, the attenuation control level is scaled along the abscissa and indicated by a symbol ACL. When supplied with the attenuation control signal of such an attenuation control level, the variable attenuator 11 gives an amount of attenuation ATT scaled along the ordinate to the device input signal. It should be noted that the amount of attenuation increases and decreases relative to a reference value when the attenuation control level is lower and higher than the control voltage, respectively.

Turning back to Fig. 1, the amplified signal is produced as the device output signal S(o) through a directional coupler 21 which is connected to a transmitter (not shown) and to the first capacitor C1 of the level detector 17. With the amplified level controlled by the attenuation control signal, the device output signal is given the controlled level. In this manner, the attenuator output signal is used as the device output signal.

Turning to Fig. 3 with Fig. 1 continuously referred to, the device output signal varies with time in the manner schematically exemplified when subjected to ON and OFF as is the case when TDM is applied to the digital modulation as described hereinabove. More specifically, the detected signal builds up and down with a delay which is determined by a time constant defined by the first resistor R1 and the third capacitor C3. The delay results in slow build up and down of the device output signal. This is objectionable on resorting to the TDM in the digital modulation. In other words, the conventional level control device is undesirable for use in a digital communication network with an amplitude variation particularly when the TDM is resorted to in the network.

Referring now to Fig. 4, the description will proceed to a level control device according to a preferred embodiment of this invention. Similar parts are designated by like reference numerals and symbols and are operable with likewise named signals which have similarly named levels indicated by like reference symbols. It is presumed as described before that the device input signal S(i) is an IF signal. The level detector 17 has a similar structure and is not depicted in detail.

The control signal generating unit 19 comprises an AD converter (A/D) 23 supplied with the detected signal for converting the detected level to a digital value. A reference value is preliminarily stored in a processor 25 in consideration of the controlled or predetermined output level of the device output signal S(o).

Connected to the AD converter 23, the processor 25 compares the digital value with the reference value and produces a processed signal with a processed level or value variable relative to the reference value with the detected level. Supplied with the processed signal, a DA converter (D/A) 27 converts the processed level to an analogue value to produce the attenuation control signal with the analogue value used as the attenuation control level. The reference value is readily selected in compliance with the controlled or predetermined output level.

Referring afresh to Fig. 5 and again to Fig. 4, the device output level steeply build up and down although the detected level slowly build up and down in the manner schematically exemplified before in Fig. 3. This is because, when being supplied with the device input signal, the variable attenuator 11 processes the device input signal into an attenuated signal under control of the attenuation control signal from the DA converter 27 which has been previously delivered from the processor 25 in the control signal generating unit 19. The attenuated signal is delivered as the device output signal through the power amplifier 15. Thereafter, the control signal generating unit 19, in detail, the processor 25 detects the level of the device output signal, namely, the attenuated level at a time instant labelled IN before the device output signal builds down. Subsequently, the control signal generating unit 19 produces the attenuation control signal at another time instant OUT immediately before next build up of the device output signal. The attenuation control signal may be produced immediately after level detection of the device output signal provided that a variation is allowable in the power of the device output signal while the burst is kept on.

This is because the level detecting unit (13-17 or 15, 17) begins production of the detected signal in the example being illustrated when supplied with the attenuator output signal, namely, when the level detector 17 is supplied with the amplified signal provided that the power amplifier 15 theoretically or in an ideal manner produces the amplified signal. This is furthermore because the attenuation control level is kept constant due to the fact that the amount of attenuation is maintained at an ideal value by the attenuation control signal generated by the level detecting unit.

Incidentally, the processor 25 is put in operation through the AD converter 23 each time when the detected signal is caused to build up by the level detector 17. When the device input signal is a succession of bursts, the processor 25 is supplied with the detected signal upon each burst on and starts to produce the attenuation control signal when each burst is turned off.

Reviewing Figs. 4 and 5, it is understood that the illustrated level control device produces the device output signal with the controlled output level or power which is reliable, namely, correct or precise and stable. This is because of the salient structure of the control signal generating unit 19.

While this invention has thus far been described in specific conjunction with a single embodiment thereof, it will now be readily possible for one skilled in the art to put this invention into practice in various other manners. For example, a variable gain amplifier is an equivalent of the variable attenuator 11. It is possible to modify the level detector 17.

## Claims

1. A level control device producing a device output signal in response to a device input signal with said device output signal given a controlled output level and comprising a variable attenuator (11) responsive to said device input signal for producing an attenuator output signal with an attenuated level, level detecting means (13-17) for detecting said attenuator output signal to produce a detected signal with a detected level related to said attenuated level, and control signal generating means (19) for generating a control signal for supply to said variable attenuator based on said detected level, characterized in that said control signal generating means (19) comprises an AD converter (23) for converting said detected level to a digital value, a processor (25) for processing said digital value into a processed value by comparing said digital value with a reference value, and a DA converter (27) for converting said-processed value to an analogue value to produce a controller output signal with said analogue value for use as said control signal, whereby said attenuator output signal is used as said device output signal.

2. A level control device as claimed in Claim 1, said device input signal being an intermediate frequency signal, wherein said level detecting means (13-17) comprises an up converter (13) for converting said attenuator output signal to a radio frequency signal, a power amplifier (15) for amplifying said radio frequency signal into an amplified signal having an amplified level related to said attenuated level, and a level detector (17) supplied with said amplified signal to produce said detected signal with said detected level related to said amplified level, whereby said amplified signal is used as said device output signal with said amplified level used as said controlled output level.

3. A level control device as claimed in Claim 1 or 2, said device input signal being a radio frequency signal, wherein said level detecting means (13-17) is a modified level detecting unit (15, 17) comprising a power amplifier (15) for amplifying said attenuator output signal into an amplified signal having an amplified level related to said attenuated level and a level detector (17) supplied with said amplified signal to produce said detected signal with said detected level related to said amplified level, whereby said amplified signal is used as said detector output signal with said amplified level used as said controlled output level.
